# EUROPEAN PATENT SPECIFICATION

(11) **EP 1 915 537 B1**
(45) Date of publication and mention of the grant of the patent: **30.03.2016**
(21) Application number: 06769618.7
(22) Date of filing: 17.08.2006
(51) Int. Cl.: F15B 1/24, F16F 9/06, F16F 9/32, F15B 1/02

(54) **METHOD FOR ARRANGING A SEPARATING PISTON IN A CAVITY AND A DEVICE WITH SUCH A SEPARATING PISTON**
VERFAHREN ZUM ANORDNEN EINES TRENNKOLBENS IN EINEM HOHLRAUM UND VORRICHTUNG MIT SOLCH EINEM TRENNKOLBEN
PROCÉDÉ POUR PLACER UN PISTON DE SÉPARATION DANS UNE CAVITÉ ET DISPOSITIF ASSOCIÉ

(30) Priority: 19.08.2005 SE 0501836
(43) Date of publication of application: 30.04.2008
(73) Proprietor: ÖHLINS RACING AB, 194 27 Upplands Väsby (SE)
(72) Inventor: SÖDERDAHL, Johan, 118 52 Stockholm (SE)
(74) Representative: Awapatent AB
(86) International application number: PCT/SE2006/000951
(87) International publication number: WO 2007/021233

(56) References cited:
- GB-A- 1 206 752
- US-A- 3 863 676
- US-A- 4 890 822

## Description

The present invention relates, among other things, to a method for arranging a separating piston in a system cavity where a liquid medium is sealed off and separated from a second medium, for example gas (air), by means of the separating piston.

Such a separating piston is known from US 3 863 676 A.

The invention also relates to a device with a separating piston in a system cavity, for example a steering damper cavity, where the piston seals off and separates a liquid medium from a second medium, for example gas (air).

When arranging the separating piston in the cavity, the separating piston is to be positioned in the cavity in a position where it can carry out its function with regard to maintaining the pressure within a predetermined pressure range. The system and the device must be able to compensate for changes in volume as a result of changes in temperature, leakage, etc, so that the system, the steering damper, etc, has the same damping characteristics in spite of the said varying factors.

The setting of the initial position of the separating piston in the cavity is critical and has hitherto involved a complicated method in which a special tool is used and it has been necessary to empty the system of the liquid medium in order to carry out the setting, which, in the case of the replacement or repair of a separating piston in an existing system that is in use, means that the whole system must be emptied of liquid in order to carry out the replacement or repair.

The objects of the present invention are, among other things, to solve this problem and make possible noncritical setting of the initial position of the separating piston even though the system is provided with liquid. The separating piston is given an initial position that takes into account any variations in pressure between the upper and lower sides of the separating piston resulting from the said temperature variations, leakage, etc.

The principal characteristics of a method according to the invention are, among other things, that the liquid medium is introduced or has been introduced into the cavity, that a first part of a piston comprised in the separating piston is lowered into the liquid medium in a direction towards the inner part of the cavity, and that a second part of a piston comprised in the separating piston is lowered into the cavity and is caused to interact with the first part of the piston by the application of an interaction force, for example via an actuating area located on the second piston. A volume of liquid is thereby confined between the parts of the piston by the said interaction and, following the said interaction, the second part of the piston is subjected to downward-pressing forces, for example via the said actuating area, with the result that parts of the second piston are urged to continue to penetrate into the first part of the piston. As a result of this, all or parts of the confined volume of liquid are forced out into the cavity under the first part of the piston via a passage in this, whereupon the volume of liquid thus forced out acts upon a lower area that is larger than the in the.first piston part down-pressed area of the second piston part. As a result of the difference in area between the in the first piston part down-pressed area of the second piston part and the lower area, the downward-pressing force causes the first part of the piston to move upwards in relation to the second part of the piston. The motion is ended when the first and second piston part is pressed together into a final position, so that the separating piston as such is at a distance from the said inner parts of the cavity. A spring function, for example a mechanical spring, is finally arranged to act on the separating piston at the upper part of the second part of the piston.

The principal characteristics of a device according to the invention are, among other things, that the separating piston can comprise first and second parts of the piston, that the first part of the piston is arranged to be able to be inserted into the liquid medium towards the inner parts of the cavity and that the second part of the piston is similarly arranged to be able to be inserted into the liquid medium and is able to be partially pressed down, by downward-pressing forces, into the first part of the piston. In the partially pressed-down position of the second piston, the first and second parts of the piston contain a volume of liquid medium and the first piston is provided with a passage leading in a direction towards the said inner parts, which passage is arranged to allow all or parts of the confined volume of liquid medium to pass through as a result of the downward-pressing forces. The first piston has a lower area and the second piston has a down-ward pressed area. The lower area is larger than the down-ward pressed area and the downward-pressing forces cause the volume of liquid medium that has been forced out to make contact with the lower area and hence cause the first part of the piston to move from the said inner parts towards the second part of the piston to a final combined position for the parts of the piston at a distance from the inner parts. In order to maintain the downward-pressing forces and pressurization of the liquid medium, the second piston can interact with a spring function.

In further developments of the concept of the invention, the first part of the piston is tubular and has an inner cavity that receives parts of the second part of the piston. An end part comprises the said passage in the form of a central hole that extends through the first part of the piston, and the first part of the piston can have a seal at the end part that can interact with the inner wall of the system cavity. The end part can have the lower area on its outside. The second part of the piston can be arranged to be able to be inserted in the inner cavity of the first part of the piston and can be sealed against the inner wall of this cavity by means of a sealing arrangement. In an additional embodiment, the actuating area of the second piston can comprise, an outer flange surface, upon which the spring function, in form of a mechanical spring, can be arranged or can make contact. In addition, the second part of the piston can have a central part that extends upwards. In addition, the said distance is selected to ensure that the separating piston, comprising the first and second parts of the piston, carries out movements within the system cavity within the limits in which the separating piston is to operate. A considerable part or all of the confined volume of liquid medium can have been forced out through the passage when the downward-pressing forces cause the parts of the piston to assume a completely combined or pressed-together position. At its outer end surface, the first piston can have a peripheral contact surface that can make contact with a corresponding stop surface in the inner part of the system cavity, and the inner part can have an opening that is opposite the central hole in the first part of the piston, into which the confined volume of the liquid medium is initially able to be forced down.

By means of what is proposed above, a reliably-operating and advantageously-constructed separating piston is obtained that, in spite of the fact that it comprises two parts of a piston, can be constructed in such a way that the parts of the piston maintain their relative positions in a combined position as a result of the ratio of their areas. The system can be filled with liquid when the piston is inserted and the distance to the inner parts can be given a value that enables the separating piston to operate within fixed or predetermined limit values in, preferably, a steering damper.

Currently proposed embodiments of a method and a device will be described below, with reference to the attached drawings, in which
- Figure 1: shows in vertical section a steering damper, and
- Figures 2a-2b: show in vertical section parts of an accumulator comprised in the steering damper according to Figure 1, in which the parts of the a piston assume different positions in relation to each other when the method is implemented.

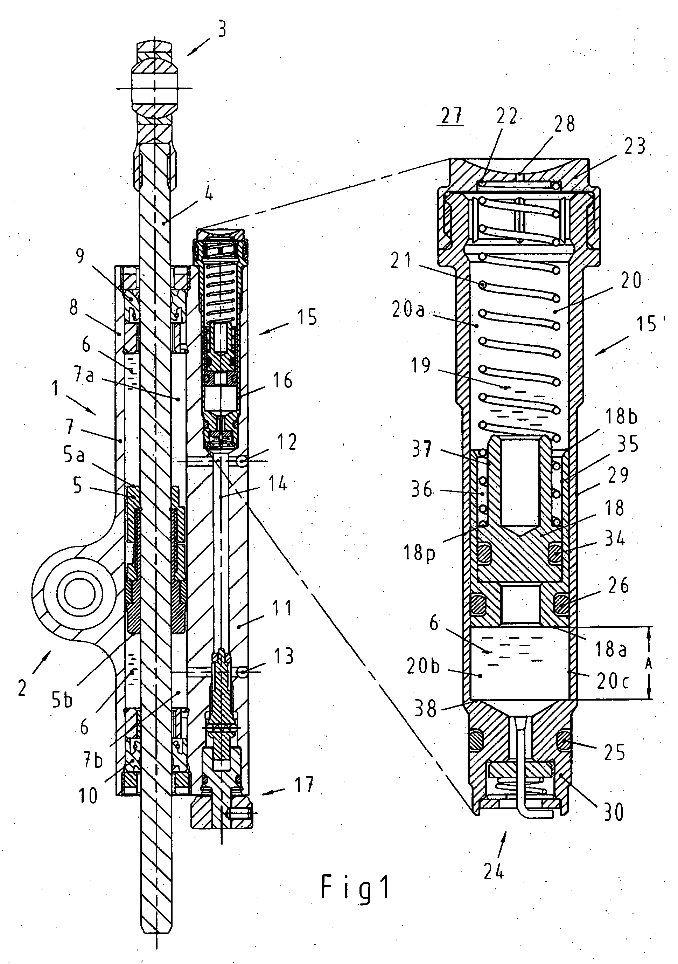

Figure 1 shows a steering damper represented by 1, the basic construction of which can be of a known type and, for example, consists of the Öhlins SD100 or SD200 steering damper sold on the general market by the applicant of the present patent application. The steering damper comprises mounting devices 2 for mounting the steering damper onto the handlebars of a motorcycle, cycle, etc, (not shown in Figure 1). In addition, there are mounting devices 3 for mounting it to the frame or.chassis of the vehicle (not shown). The steering damper comprises a piston rod 4 extending in the longitudinal direction of the damper that has mounting devices 3 at one end. A piston (piston arrangement) 5 is fixed on the piston rod, which piston operates in a liquid medium 6 that has been introduced into the cavity 7 of the steering damper. The cavity, the piston rod and the piston can be mounted on a part 8, in or on which the first mounting device is arranged. The piston rod is mounted so that it passes through the ends of the part 8 and has sealing devices 10 that allow a movement between the rod and the part 8. The steering damper also has a unit 11 that is connected to the part 8, which unit 11 comprises a duct system with ducts 12, 13 and 14 that make possible for liquid to pass between the upper and lower sides 5a and 5b of the piston 5, in other words, that connect the partial cavity 7a above the piston with the partial cavity 7b below the piston. In the embodiment, the unit 11 also comprises a reservoir for a unit 15 that maintains the pressure of the liquid and that ensures that the steering damper can retain its damping characteristics within predetermined variations in temperature, in the event of minor leakage in the steering damper, etc. In Figure 1, the unit is also shown enlarged and in a protruding position and has accordingly been given the reference numeral 15'. The unit 11 has a longitudinal opening 16, in which the unit 15, 15' is mounted. The unit 11 is also provided with a pressure-regulating device 17 of a known type. The unit 15, 15' shows a piston arrangement 18 that acts as a separating piston between the liquid (for example hydraulic oil) 6 in the steering damper (the system) on the underside 18a of the separating piston and a gaseous medium 19, (for example air), on the upper side 18b of the separating piston. The unit 15, 15' has a cavity 20, with the partial cavities 20a and 20b for the gas and liquid mediums. On the separating. piston 18, there is a spring, that consists of a spiral spring 21 in the example illustrated, that is in contact with an actuating area 18p. The spring is attached between the actuating area and an internal surface 22 on a part (a nut) 23 that, closes the cavity 20 and the separating piston 18 operates against the effect of the spring function, that can also be achieved by other means and arrangements. At its other end, the unit 15, 15' is provided with a connecting arrangement 24 for connecting the partial cavity 20b to the duct arrangement. At one end, the unit 15, 15' has a sealing element 25 that seals the unit against an inner surface on the cavity 16. The separating piston is provided with a sealing element 26 that seals off the unit against an inner surface 20c in the cavity 20. The cavity 20a is connected to the surrounding atmosphere 27 via a passage (hole) 28, for example in the said nut 23 that is connected to the unit 15, 15' in such a way that it forms a seal. A (tubular) part, which surrounds the cavity 20 and the separating piston 18, is indicated by 29.

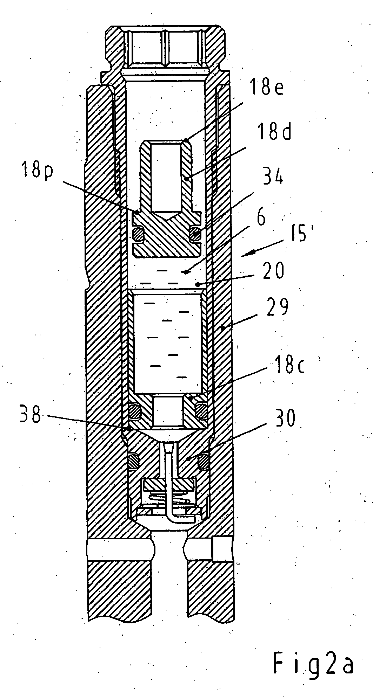

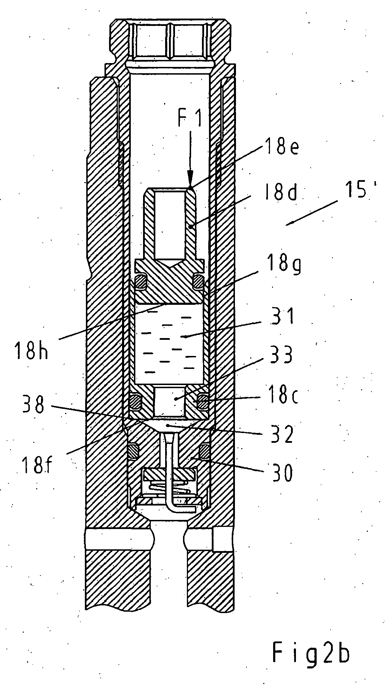

Figures 2a and 2b show the assembly and the arrangement for the construction of the piston 18 in greater detail. The method can be considered to work in three steps or phases, with Figure 2a showing the first step, Figure 2b showing the second step and Figure 1 showing the third step.

In step 1, the liquid medium 6 is introduced or has been introduced into the cavity, whereupon a first part of a piston 18c comprised in the separating piston 18 is inserted down into the liquid medium in a direction towards the inner part 30 of the cavity. The first part of the piston 18c has a lower area 18f on the underside 18a of the separating piston. In the second step, a second part of a piston 18d comprised in the separating piston is inserted down into the cavity 20 and is caused to interact with the first part of the piston 18c by the application of an interaction force F1 via an actuating area 18e and/or 18p located on the second piston. A volume 31 of the said liquid 6 is thereby confined between the parts of the piston 18c and 18d by the said interaction. In the third step, the second part 18d of the piston is subjected to downward-pressing forces, via the said actuating area 18e and/or 18p, that correspond to or exceed the said forces F1.

Application of this downward-pressing force results in an overcome of the friction forces between the first 18c and the second 18d piston part and parts 18g of the second piston 18d are urged to continue to be inserted into the first part of the piston 18c. As a result of this, all or parts of the confined volume of liquid 31 are forced out into the cavity 32 below the first part of the piston 18c via a passage 33 in this. The forced-out volume of liquid acts upon a lower area 18f of the first piston part 18c that is larger than the by the part 18g in the first part 18c down-ward pressed area 18h. As a result of the difference in area of the down-ward pressed area 18h and the lower area 18f, the first part of the piston 18c will be caused to move upwards in relation to the second part of the piston 18d by the downward-pressing force F1 and, in a final position in which it is pressed together with the second piston, the separating piston as such is at a distance A from the said inner parts of the cavity. The said spring function 21 can thereafter be caused to act against the separating piston at the upper part 18e of the second part of the piston or the actuating area 18p that is also assumed to be located on the upper part. The second part of the piston has a sealing arrangement 34 for sealing the second part of the piston against an, inner surface 35 of the first part of the piston that has an inner cavity 36 for the second part of the piston. The second part of the piston also has an internal guide 37 for the spring. The spring 21 extends down between the guide and an inner wall in the first part of the piston to interact with the actuating area 18p and in this way control is achieved.

Thus, when inserted into the liquid, the separating piston comprises first and second parts of the piston 18c and 18d that can be pressed together. The ratio of the down-ward pressed area 18h and the lower area 18f is selected in such a way that the relative combined positions established at the time of the insertion are retained when the spring function 21 is applied. Before the second part 18d of the piston is inserted into the first part 18c of the piston, the lower area 18a of the first 18c piston part rests on a stop surface 38 of the inner part 30. While it is being inserted, the piston is raised from the inner parts 30 of the cavity by the distance A that ensures pressurization that provides the same damping characteristics in the damper irrespective of variations in temperature, leakage, etc. The inner part 30 can also include an opening/cavity 32 that is opposite the central hole 33 in the first part of the piston 18c, in which the confined volume 31 is initially able to be forced drown. In an embodiment, the whole confined volume 31 is initially forced out between the parts 18c, 18d of the piston. By the expression "upper part of the second part of the piston" is meant the actual part of the piston without the guide 37. In an embodiment, the second part of the piston does not need to be pressed into the first part of the piston but is over the first part of the piston and hence confines a volume in a corresponding way.

The invention is not limited to the embodiments described above but can be modified within the scope of the following claims.

## Claims

1. A method for arranging a separating piston (18) in a system cavity (20) where a liquid medium (6) is sealed off and separated from a second medium, for example gas (19), by means of the separating piston (18), **characterized in that** the liquid medium (6) is introduced or has been introduced into the cavity (20), **in that** a first part of a piston (18c) comprised in the separating piston (18) is lowered into the liquid medium (6) in a direction towards the inner part (30) of the cavity (20), **in that** a second part of a piston (18d) comprised in the separating piston (18) is lowered into the cavity (20) and is caused to interact with the first part of the piston (18c) by the application of an interaction force (F1), via an actuating area (18p, 18e) located on the second piston part (18d), **in that** a volume of liquid (31) is confined between the parts of the piston (18c, 18d) by the said interaction, **in that**, following the said interaction, the second part of the piston (18d) is subjected to downward-pressing forces, with the result that parts (18g) of the second piston (18d) are urged to continue to penetrate into the first part of the piston (18c), **in that**, as a result of this, all or parts of the confined volume of liquid (31) are forced out into the cavity (32) under the first part of the piston (18c) via a passage (33) in this, **in that** the volume of liquid thus forced out acts upon an underside (18a) of the first piston part (18c), said underside having a lower area (18f) that is larger than the by the part (18g) in the first piston part (18c) down-ward pressed area (18h), **in that**, as a result of the difference in area between the down-ward pressed area (18h) and the lower area (18f), the downward-pressing force causes the first part of the piston (18c) to move upwards in relation to the second part of the piston (18d) and into a final position in which it is pressed together with the second piston (18d), so that the separating piston (18) as such is at a distance (A) from the said inner parts (30) of the cavity (20), where the parts of the piston maintain their relative positions in a pressed-together position as a result of the ratio of their areas, and **in that** a spring function (21), for example a mechanical spring, is arranged to act on the separating piston (18) at the upper part (37) of the second part of the piston (18d).

2. A method for arranging a separating piston (18) as claimed in claim 1, **characterized in that** before the second part (18d) of the piston is inserted into the first part (18c) of the piston, the lower area (18a) of the first piston part (18c) rests on a stop area (38) of the inner part (30).

3. A device with a separating piston (18) in a system cavity (20), for example a steering damper cavity, where the piston (18) seals off and separates a liquid medium (6) from a second medium, for example gas (air) (19), **characterized in that** the separating piston (18) comprises first (18c) and second (18d) parts of the piston, **in that** the first part of the piston (18c) is arranged to be able to be inserted into the liquid medium (6) towards the inner parts (30) of the cavity (20), **in that** the second part of the piston (18d) is similarly arranged to be able to be inserted into the liquid medium (6) and is able to be partially pressed down, by downward-pressing forces, into the first part of the piston (18c), **in that**, in the partially pressed-down position of the second piston (18d), the first and second parts of the piston (18c, 18d) contain a volume of liquid medium (31), **in that** the first piston (18c) is provided with a passage (33) leading in a direction towards the said inner parts (30), which passage (33) is arranged to allow all or parts of the confined volume of liquid medium (31) to pass through as a result of the downward-pressing forces, **in that** an underside (18a) of the first piston (18c) has a lower area (18f) and the second piston (18d) has an down-ward pressed area (18h), **in that** the lower area (18f) is larger than the down-ward pressed area (18h), **in that** the downward-pressing forces cause the volume of liquid medium that has been forced out to make contact with the underside (18a) and hence cause the first part of the piston (18c) to move from the said inner parts (30) towards the second part of the piston (18d) to a final pressed together position for the parts of the piston (18c, 18d) at a distance from the inner parts (30), and **in that**, in order to maintain the downward-pressing forces and pressurization of the liquid medium, the second piston part (18d) is arranged to interact with a spring function (21), and **in that** the parts of the piston maintain their relative positions in said pressed-together position as a result of the ratio of their areas.

4. The device as claimed in claim 3, **characterized in that** the first part of the piston (18c) is tubular and has an inner cavity (20) that receives parts of the second part of the piston (18d) and an end part that comprises the said passage (33) in the form of a central hole that extends through the first part of the piston (18c) and **in that** the first part of the piston (18c) has a seal (26) at the end part that can interact with the inner wall (20c) of the system cavity.

5. The device as claimed in claim 4, **characterized in that** the second part of the piston (18d) can be arranged to be able to be inserted in the inner cavity (20) of the first part of the piston (18c) and to be sealed against the inner wall (20c) of this cavity by means of a sealing arrangement (26).

6. The device as claimed in claim 5, **characterized in that** the actuating area (18p) of the second piston (18d) comprises an outer flange surface, upon which the spring function (21), in form of a mechanical spring, can be arranged or can make contact.

7. The device as claimed in claim 6, **characterized in that** the second part of the piston (18d) has a central part (37) that extends upwards.

8. The device as claimed in any one of claims 3-7, **characterized in that** a considerable part or all of the confined volume of liquid medium (31) can have been forced out through the passage (33) when the downward-pressing forces cause the parts of the piston (18c, 18d) to assume a completely combined or pressed-together position.

9. The device as claimed in any one of claims 3-8, **characterized in that**, at its outer end surface (18a), the first piston (18c) has a peripheral contact surface (18f) that can make contact with a corresponding stop surface (38) in the inner part (30) of the system cavity (20), and **in that** the inner part (30) has an opening (32) that is opposite the central hole (33) in the first part of the piston (18c), into which the confined volume of the liquid (31) medium is initially able to be forced down.

10. A device with a separating piston (18) in a system cavity (20)' for example a steering damper cavity, where the piston (18) seals off and separates a liquid medium (6) from a second medium, for example gas (air) (19) **characterized in that** the separating piston (18) comprises first (18c) and second parts (18d) of the piston, the first piston part (18c) has a lower surface (18a) with a lower area (18f) as well as an inner cavity (36) which contains a confined volume (31) of said liquid medium (6), the second piston part (18d) is in contact with the liquid medium (6) through an area (18h), where the first piston part (18c) is down-wardly pressed into said liquid medium (6) in direction towards an inner part (30) and where the second piston part (18d) is arranged down-wardly pressed into the first piston part (18c) to a pressed together position so that the confined liquid volume (31) is pressed through an opening (33) in the first piston part (18c) into a cavity (20b) arranged by the inner part (30) so that a distance (A) is formed between the inner part (30) and the lower surface (18a) on the first piston part (18c), where the distance (A) is ensured by the confined volume (31) and the difference in area between the down-ward pressed area (18h) and the lower area (18f), and where the lower area (18f) is larger than the down-ward pressed area (18h), and **in that** the parts of the piston, as a result of the ratio of their areas, maintain their relative positions in said pressed-together position as a spring function is applied to the second piston part.

## Patentansprüche

1. Verfahren zum Anordnen eines Trennkolbens (18) in einem Systemhohlraum (20), wobei ein flüssiges Medium (6) mittels des Trennkolbens (18) gegen ein zweites Medium, zum Beispiel Gas (19), abgedichtet und von ihm getrennt wird, **dadurch gekennzeichnet, dass** das flüssige Medium (6) in den Hohlraum (20) eingeleitet wird oder eingeleitet worden ist, dadurch, dass ein erster Teil eines Kolbens (18c), der in dem Trennkolben (18) enthalten ist, in das flüssige Medium (6) in einer Richtung zum inneren Teil (30) des Hohlraums (20) hin abgesenkt wird, dadurch, dass ein zweiter Teil eines Kolbens (18d), der in dem Trennkolben (18) enthalten ist, in den Hohlraum (20) abgesenkt wird und dazu gebracht wird, mit dem ersten Teil des Kolbes (18c) durch die Ausübung einer Interaktionskraft (F1), über eine auf dem zweiten Kolbenteil (18d) angeordnete Betätigungsfläche (18p, 18e), zu interagieren, dadurch, dass ein Volumen von Flüssigkeit (31) durch diese Interaktion zwischen den Teilen des Kolbens (18c, 18d) eingeschlossen ist, dadurch, dass im Anschluss an diese Interaktion der zweite Teil des Kolbens (18d) nach unten drückenden Kräften ausgesetzt wird, mit dem Ergebnis, dass Teile (18g) des zweiten Kolbens (18d) weiter in den ersten Teil des Kolbens (18c) hineingedrückt werden, dadurch, dass infolgedessen das gesamte eingeschlossene Volumen von Flüssigkeit (31) oder Teile davon hinaus in den Hohlraum (32) unter dem ersten Teil des Kolbens (18c) über einen Durchlass (33) in diesem gedrückt wird bzw. werden, dadurch, dass das auf diese Weise hinausgedrückte Volumen von Flüssigkeit auf eine Unterseite (18a) des ersten Kolbenteils (18c) einwirkt, wobei diese Unterseite eine untere Fläche (18f) aufweist, welche größer als die durch den Teil (18g) in dem ersten Kolbenteil (18c) nach unten gedrückte Fläche (18h) ist, dadurch, dass infolge der Flächendifferenz zwischen der nach unten gedrückten Fläche (18h) und der unteren Fläche (18f) die nach unten drückende Kraft bewirkt, dass sich der erste Teil des Kolbens (18c) in Bezug auf den zweiten Teil des Kolbens (18d) nach oben und in eine endgültige Position bewegt, in welcher er mit dem zweiten Kolben (18d) zusammengedrückt ist, so dass sich der Trennkolben (18) als solcher in einem Abstand (A) von den inneren Teilen (30) des Hohlraums (20) befindet, wobei die Teile des Kolbens ihre relativen Positionen in einer zusammengedrückten Position infolge des Verhältnisses ihrer Flächen beibehalten, und dadurch, dass eine Federfunktion (21), zum Beispiel eine mechanische Feder, dafür eingerichtet ist, auf den Trennkolben (18) am oberen Teil (37) des zweiten Teils des Kolbens (18d) einzuwirken.

2. Verfahren zum Anordnen eines Trennkolbens (18) nach Anspruch 1, **dadurch gekennzeichnet, dass**, bevor der zweite Teil (18d) des Kolbens in den ersten Teil (18c) des Kolbens eingesetzt wird, die untere Fläche (18a) des ersten Kolbenteils (18c) auf einer Anschlagfläche (38) des inneren Teils (30) ruht.

3. Vorrichtung mit einem Trennkolben (18) in einem Systemhohlraum (20), zum Beispiel einem Lenkungsdämpfer-Hohlraum, wobei der Kolben (18) ein flüssiges Medium (6) gegen ein zweites Medium, zum Beispiel Gas (Luft) (19), abdichtet und von ihm trennt, **dadurch gekennzeichnet, dass** der Trennkolben (18) einen ersten (18c) und einen zweiten (18d) Teil des Kolbens umfasst, dadurch, dass der erste Teil des Kolbens (18c) dafür eingerichtet ist, in das flüssige Medium (6) zu den inneren Teilen (30) des Hohlraums (20) hin eingesetzt werden zu können, dadurch, dass der zweite Teil des Kolbens (18d) In ähnlicher Weise dafür eingerichtet ist, in das flüssige Medium (6) eingesetzt werden zu können, und durch nach unten drückende Kräfte teilweise nach unten in den ersten Teil des Kolbens (18c) hineingedrückt werden kann, dadurch, dass in der teilweise nach unten gedrückten Position des zweiten Kolbens (18d) der erste und der zweite Teil des Kolbens (18c, 18d) ein Volumen von flüssigem Medium (31) enthalten, dadurch, dass der erste Kolben (18c) mit einem Durchlass (33) versehen ist, der in eine Richtung zu den inneren Teilen (30) hin führt, wobei dieser Durchlass (33) dafür eingerichtet ist zu ermöglichen, dass das gesamte eingeschlossene Volumen von flüssigem Medium (31) oder Teile davon infolge der nach unten drückenden Kräfte hindurchströmen, dadurch, dass eine Unterseite (18a) des ersten Kolbens (18c) eine untere Fläche (18f) aufweist und der zweite Kolben (18d) eine nach unten gedrückte Fläche (18h) aufweist, dadurch, dass die untere Fläche (18f) größer als die nach unten gedrückte Fläche (18h) ist, dadurch, dass die nach unten drückenden Kräfte bewirken, dass das Volumen von flüssigem Medium, welches hinausgedrückt wurde, mit der Unterseite (18a) in Kontakt kommt und daher bewirkt, dass sich der erste Teil des Kolbens (18c) von den inneren Teilen (30) zum zweiten Teil des Kolbens (18d) hin zu einer endgültigen zusammengedrückten Position für die Teile des Kolbens (18c, 18d) in einem Abstand von den inneren Teilen (30) bewegt, und dadurch, dass, um die nach unten drückenden Kräfte und die Druckbeaufschlagung des flüssigen Mediums aufrechtzuerhalten, der zweite Kolbenteil (18d) dafür eingerichtet ist, mit einer Federfunktion (21) zu interagieren, und dadurch, dass die Teile des Kolbens ihre relativen Positionen in der zusammengedrückten Position infolge des Verhältnisses ihrer Flächen beibehalten.

4. Vorrichtung nach Anspruch 3, **dadurch gekennzeichnet, dass** der erste Teil des Kolbens (18c) rohrförmig ist und einen inneren Hohlraum (20), welcher Teile des zweiten Teils des Kolbens (18d) aufnimmt, und einen Endteil, welcher den Durchlass (33) in der Form eines zentralen Loches umfasst, welches sich durch den ersten Teil des Kolbens (18c) hindurch erstreckt, aufweist, und dadurch, dass der erste Teil des Kolbens (18c) eine Dichtung (26) an dem Endteil aufweist, welche mit der Innenwand (20c) des Systemhohlraums interagieren kann.

5. Vorrichtung nach Anspruch 4, **dadurch gekennzeichnet, dass** der zweite Teil des Kolbens (18d) dafür eingerichtet sein kann, in den inneren Hohlraum (20) des ersten Teils des Kolbens (18c) eingesetzt und gegen die Innenwand (20c) dieses Hohlraums mittels einer Dichtungsanordnung (26) abgedichtet werden zu können.

6. Vorrichtung nach Anspruch 5, **dadurch gekennzeichnet, dass** die Betätigungsfläche (18p) des zweiten Kolbens (18d) eine äußere Flanschfläche umfasst, auf welcher die Federfunktion (21), in Form einer mechanischen Feder, angeordnet sein kann oder mit welcher diese sich in Kontakt befinden kann.

7. Vorrichtung nach Anspruch 6, **dadurch gekennzeichnet, dass** der zweite Teil des Kolbens (18d) einen mittleren Teil (37) aufweist, welcher sich nach oben erstreckt.

8. Vorrichtung nach einem der Ansprüche 3 - 7, **dadurch gekennzeichnet, dass** ein beträchtlicher Teil oder die Gesamtheit des eingeschlossenen Volumens von flüssigem Medium (31) durch den Durchlass (33) hindurch hinausgedrückt worden sein kann, wenn die nach unten drückenden Kräfte bewirken, dass die Teile des Kolbens (18c, 18d) eine vollständig kombinierte oder zusammengedrückte Position einnehmen.

9. Vorrichtung nach einem der Ansprüche 3 - 8, **dadurch gekennzeichnet, dass** der erste Kolben (18c) an seiner äußeren Endfläche (18a) eine Umfangskontaktfläche (18f) aufweist, welche mit einer entsprechenden Anschlagfläche (38) im inneren Teil (30) des Systemhohlraums (20) in Kontakt kommen kann, und dadurch, dass der innere Teil (30) eine Öffnung (32) aufweist, welche dem zentralen Loch (33) im ersten Teil des Kolbens (18c) gegenüberliegt, in welches das eingeschlossene Volumen des flüssigen Mediums (31) zunächst nach unten gedrückt werden kann.

10. Vorrichtung mit einem Trennkolben (18) in einem Systemhohlraum (20), zum Beispiel einem Lenkungsdämpfer-Hohlraum, wobei der Kolben (18) ein flüssiges Medium (6) gegen ein zweites Medium, zum Beispiel Gas (Luft) (19), abdichtet und von ihm trennt, **dadurch gekennzeichnet, dass** der Trennkolben (18) einen ersten (18c) und einen zweiten (18d) Teil des Kolbens umfasst, der erste Kolbenteil (18c) eine Unterseite (18a) mit einer unteren Fläche (18f) sowie einen inneren Hohlraum (36), welcher ein eingeschlossenes Volumen (31) des flüssigen Mediums (6) enthält, aufweist, der zweite Kolbenteil (18d) sich mit dem flüssigen Medium (6) über eine Fläche (18h) in Kontakt befindet, wobei der erste Kolbenteil (18c) nach unten in das flüssige Medium (6) hinein in Richtung zu einem inneren Teil (30) hin gedrückt wird, und wobei der zweite Kolbenteil (18d) nach unten in den ersten Kolbenteil (18c) hinein zu einer zusammengedrückten Position gedrückt angeordnet ist, so dass das eingeschlossene Flüssigkeitsvolumen (31) durch eine Öffnung (33) im ersten Kolbenteil (18c) hindurch in einen Hohlraum (20b) gedrückt wird, der durch den inneren Teil (30) ausgebildet ist, so dass ein Abstand (A) zwischen dem inneren Teil (30) und der Unterseite (18a) auf dem ersten Kolbenteil (18c) gebildet wird,
wobei der Abstand (A) durch das eingeschlossene Volumen (31) und die Flächendifferenz zwischen der nach unten gedrückten Fläche (18h) und der unteren Fläche (18f) gewährleistet wird,
und wobei die untere Fläche (18f) größer als die nach unten gedrückte Fläche (18h) ist,
und dadurch, dass die Teile des Kolbens infolge des Verhältnisses ihrer Flächen ihre relativen Positionen in der zusammengedrückten Position beibehalten, da eine Federfunktion auf den zweiten Kolbenteil ausgeübt wird.

## Revendications

1. Procédé pour placer un piston de séparation (18) dans une cavité de système (20) où un milieu liquide (6) est hermétiquement isolé et séparé d'un deuxième milieu, par exemple du gaz (19), au moyen du piston de séparation (18), **caractérisé en ce que** le milieu liquide (6) est introduit ou a été introduit dans la cavité (20), **en ce qu'**une première partie d'un piston (18c) comprise dans le piston de séparation (18) est baissée dans le milieu liquide (6) dans une direction dirigée vers la partie intérieure (30) de la cavité (20), **en ce qu'**une deuxième partie d'un piston (18d) comprise dans le piston de séparation (18) est baissée dans la cavité (20) et est amenée à interagir avec la première partie du piston (18c) par l'application d'une force d'interaction (F1) via une zone d'actionnement (18p, 18e) située sur la deuxième partie de piston (18d), **en ce qu'**un volume de liquide (31) est confiné entre les parties du piston (18c, 18d) par ladite interaction, **en ce qu'**après ladite interaction, la deuxième partie du piston (18d) est soumise à des forces de compression vers le bas, avec pour résultat que les parties (18g) du deuxième piston (18d) sont poussées à continuer de pénétrer dans la première partie du piston (18c), **en ce qu'**en résultat de cela, tout le volume confiné de liquide (31) ou des parties de celui-ci est/sont expulsé(es) dans la cavité (32) sous la première partie du piston (18c) via un passage (33) dans celui-ci, **en ce que** le volume de liquide ainsi expulsé agit sur une face inférieure (18a) de la première partie de piston (18c), ladite face inférieure ayant une zone inférieure (18f), qui est plus grande que la zone comprimée vers le bas (18h) dans la première partie de piston (18c) par la partie (18g), **en ce qu'**en résultat de la différence dans la zone située entre la zone comprimée vers le bas (18h) et la zone inférieure (18f), la force comprimant vers le bas fait en sorte que la première partie du piston (18c) se déplace vers le haut par rapport à la deuxième partie du piston (18d) et dans une position finale dans laquelle elle est comprimée avec le deuxième piston (18d) de sorte que le piston de séparation (18) comme tel est à une distance (A) desdites parties intérieures (30) de la cavité (20), où les parties du piston maintiennent leurs positions relatives dans une position de compression ensemble en résultat du rapport de leurs surfaces, et **en ce qu'**une fonction de ressort (21), par exemple un ressort mécanique, est agencée pour agir sur le piston de séparation (18) à la partie supérieure (37) de la deuxième partie du piston (18d).

2. Procédé pour placer un piston de séparation (18) selon la revendication 1, **caractérisé en ce qu'**avant que la deuxième partie (18d) du piston soit insérée dans la première partie (18c) du piston, la zone inférieure (18a) de la première partie de piston (18c) repose sur une zone de butée (38) de la partie inférieure (30).

3. Dispositif avec un piston de séparation (18) dans une cavité de système (20), par exemple, une cavité d'amortisseur de direction, où le piston (18) isole hermétiquement et sépare un milieu liquide (6) d'un deuxième milieu, par exemple du gaz (air) (19), **caractérisé en ce que** le piston de séparation (18) comprend les première (18c) et une deuxième parties (18d) de piston, **en ce que** la première partie de piston (18c) est agencée pour pouvoir être insérée dans le milieu liquide (6) vers les parties intérieures (30) de la cavité (20), **en ce que** la deuxième partie du piston (18d) est agencée de façon similaire pour pouvoir être insérée dans le milieu liquide (6) et est capable d'être partiellement comprimée vers le bas par les forces de compression vers le bas dans la première partie du piston (18c), **en ce que** dans la position partiellement comprimée vers le bas du deuxième piston (18d), les première et deuxième parties du piston (18c, 18d) contiennent un volume de milieu liquide (31), **en ce que** le premier piston (18c) est doté d'un passage (33) conduisant dans une direction dirigée vers lesdites parties intérieures (30), lequel passage (33) est agencé pour permettre à tout le volume confiné de milieu liquide (31) ou à des parties de celui-ci de passer à travers en résultat des forces de compression vers le bas, **en ce qu'**une face inférieure (18a) du premier piston (18c) a une zone inférieure (18f) et le deuxième piston (18d) a une zone comprimée vers le bas (18h), **en ce que** la zone inférieure (18f) est plus grande que la zone comprimée vers le bas (18h), **en ce que** les forces de compression vers le bas amènent le volume de milieu liquide qui a été expulsé pour faire contact avec la face inférieure (18a) et par suite amènent la première partie du piston (18c) à se déplacer desdites parties intérieures (30) vers la deuxième partie du piston (18d) vers une position finale de compression ensemble pour les parties du piston (18c, 18d) à une distance des parties intérieures (30) et **en ce qu'**afin de maintenir les forces de compression vers le bas et la pressurisation du milieu liquide, la deuxième partie du piston (18d) est agencée pour interagir avec une fonction de ressort (21) et **en ce que** les parties du piston maintiennent leurs positions relatives dans ladite position de compression ensemble par suite du rapport de leurs surfaces.

4. Dispositif selon la revendication 3, **caractérisé en ce que** la première partie du piston (18c) est tubulaire et a une cavité intérieure (20) qui reçoit des parties de la deuxième partie du piston (18d) et une partie d'extrémité qui comprend ledit passage (33) sous la forme d'un trou central qui s'étend à travers la première partie du piston (18c) et **en ce que** la première partie du piston (18c) a un joint (26) à la partie d'extrémité qui peut interagir avec la paroi intérieure (20c) de la cavité du système.

5. Dispositif selon la revendication 4, **caractérisé en ce que** la deuxième partie du piston (18d) peut être agencée pour pouvoir être insérée dans la cavité intérieure (20) de la première partie du piston (18c) et être plaquée hermétiquement contre la paroi intérieure (20c) de cette cavité au moyen d'un agencement d'étanchéité (26).

6. Dispositif selon la revendication 5, **caractérisé en ce que** la zone agissante (18p) du deuxième piston (18d) comprend une surface de bride extérieure sur laquelle la fonction de ressort (21), sous la forme d'un ressort mécanique, peut être agencée ou peut faire contact.

7. Dispositif selon la revendication 6, **caractérisé en ce que** la deuxième partie du piston (18d) a une partie centrale (37) qui s'étend vers le haut.

8. Dispositif selon l'une quelconque des revendications 3 - 7, **caractérisé en ce qu'**une partie considérable ou tout le volume confiné du milieu liquide (31) peut être expulsé à travers le passage (33) lorsque les forces de compression vers le bas amènent les parties du piston (18c, 18d) à adopter une position complètement combinée ou de compression ensemble.

9. Dispositif selon l'une quelconque des revendications 3 - 8, **caractérisé en ce qu'**à sa surface d'extrémité extérieure (18a), le premier piston (18c) a une surface de contact périphérique (18f) qui peut faire contact avec une surface de butée correspondante (38) dans la partie intérieure (30) de la cavité du système (20) et **en ce que** la partie intérieure (30) a une ouverture (32) qui est opposée au trou central (33) dans la première partie du piston (18c), dans laquelle le volume confiné de milieu liquide (31) peut initialement être contraint vers le bas.

10. Dispositif avec un piston de séparation (18) dans une cavité de système (20), par exemple une cavité d'amortisseur de direction, où le piston (18) isole hermétiquement et sépare un milieu liquide (6) d'un deuxième milieu, par exemple du gaz (air) (19), **caractérisé en ce que** le piston de séparation (18) comprend une première (18c) et une deuxième partie (18d) de piston, la première partie de piston (18c) a une surface inférieure (18a) avec une zone inférieure (18f) ainsi qu'une cavité intérieure (36) qui contient un volume confiné (31) dudit milieu liquide (6), la deuxième partie de piston (18d) est en contact avec le milieu liquide (6) à travers une zone (18h), où la première partie de piston (18c) est comprimée vers le bas dans ledit milieu liquide (6) en direction d'une partie intérieure (30) et où la deuxième partie de piston (18d) est agencée comprimée vers le bas dans la première partie de piston (18c) vers une position de compression ensemble de sorte que le volume de liquide confiné (31) est comprimé à travers une ouverture (33) dans la première partie de piston (18c) dans une cavité (20b) agencée par la partie intérieure (30) de sorte qu'une distance (A) est formée entre la partie intérieure (30) et la surface inférieure (18a) sur la première partie de piston (18c),
où la distance (A) est assurée par le volume confiné (31) et la différence dans la zone entre la zone comprimée vers le bas (18h) et la zone inférieure (18f) et où la
zone inférieure (18f) est plus grande que la zone comprimée vers le bas (18h) et **en ce que** les parties de piston, par suite du rapport de leurs surfaces, maintiennent leurs positions relatives dans ladite position de compression ensemble lorsqu'une fonction de ressort est appliquée à la deuxième partie de piston.
